# EUROPÄISCHE PATENTSCHRIFT

(11) **EP 0 535 601 B1**
(45) Veröffentlichungstag und Bekanntmachung des Hinweises auf die Patenterteilung: **10.09.1997**
(21) Anmeldenummer: 92116663.3
(22) Anmeldetag: 29.09.1992
(51) Int. Cl.: H04Q 11/04, H04Q 3/545, H04M 3/56

(54) **Verfahren zur Herstellung von Konferenzverbindungen in einer rechnergesteuerten Kommunikationsanlage**
Method for the establishment of conference connections in a processor controlled communication system
Procédé pour l'établissement de connexions de conférence dans un système de communication à commande par processeur

(30) Priorität: 30.09.1991 DE 4132550
(43) Veröffentlichungstag der Anmeldung: 07.04.1993
(73) Patentinhaber: SIEMENS AKTIENGESELLSCHAFT, 80333 München (DE)
(72) Erfinder: Vanlandeghem, Marc, B-09800 Deinze (BE)

(56) Entgegenhaltungen:
- EP-A- 0 352 701
- DE-A- 3 818 087
- US-A- 4 635 251

## Beschreibung

Die Erfindung betrifft ein Verfahren zur Herstellung von Konferenzverbindungen in einer Kommunikationsanlage, die ein zu ihrer Steuerung dienendes programierbares digitales Rechnersystem aufweist, mit mindestens einem Systemspeicher zur Speicherung von Programmodulen und von Daten und mit gerätebezogenen Einheiten zur signalisierungsartindividuellen Anschaltung von Endgeräten und mit einer Koppeleinrichtung zum Durchschalten der Verbindungswege, wobei das Rechnersystem auf innerhalb der Datenbasis abgespeicherte gerätebezogene Informationen zurückgreift die u.a. Berechtigungen, Dienste, physikalische Funktionen und besondere Gerätekonstellationen betreffen und wobei als solch eine Gerätekonstellation mindestens eine aus wenigstens einem ersten Kommunikationsendgerät und einem zweiten Kommunikationsendgerät bestehende Gruppe vorgesehen ist und ein für das zweite Kommunikationsendgerät bestimmter Verbindungsherstellungsversuch gleichzeitig an den zu dieser Gruppe gehörenden Kommunikationsendgeräten signalisiert wird und von dem ersten Kommunikationsendgerät aus als Einberufer eine Konferenzverbindung mit mehreren weiteren Endgeräten und/oder über Amtssätze eingeleitet und aufgrund der eingegebenen Prozeduren von dem Rechnersystem hergestellt wurde.

Ein solches Verfahren ist z.B. aus der DE-A-3 818 087 bekannt.

Eine modern konzipierte digitale rechnergesteuerte kationsvermittlungsanlage besteht im Prinzip aus einer Vielzahl vermittlungstechnischer Funktionseinheiten und einem programierbaren digitalen Rechnersystem, das diese Funktionseinheiten steuert und das alle vermittlungstechnischen Abläufe überwacht. Zu diesem Zweck wird das Rechnersystem mit Informationen über den Betriebszustand der Funktionseinheiten und über Zustandsänderungen, insbesondere über Eingaben an den angeschlossenen Endgeräten, informiert. Es kann deshalb bei Bedarf umgehend entsprechende Steueranweisungen und Meldungen erstellen und ausgeben. Derartige Kommunikationsvermittlungsanlagen, insbesondere Fernsprechnebenstellenanlagen, sind neben der erforderlichen Vermittlungssteuerung auch zu einer Steuerung bzw. Realisierung zusätzlicher, über den eigentlichen Vermittlungsvorgang hinausgehender Steuervorgänge befähigt. Solche zusätzlichen Funktionen werden im allgemeinen als Leistungsmerkmale bezeichnet, wobei insbesondere für den Kommunikationsdienst "Sprache" eine große Zahl unterschiedlicher Leistungsmerkmale bekannt ist. Derartige Leistungsmerkmale können entweder bei Belegen der Vermittlungseinrichtung oder aber während einer bereits bestehenden Gesprächsverbindung eingeleitet werden. Zu solchen Leistungsmerkmalen zählen beispielsweise die Verhinderung unerwünschter Verbindungen, akustische und/oder optische auf einer optischen Anzeigeeinrichtung darstellbare Hinweise für die jeweilige Bedienperson eines Endgerätes in unterschiedlichen vermittlungstechnischen Zuständen, sowie die Möglichkeit eine Rückfrage zu einem anderen Teilnehmer aus einer bestehenden Gesprächsverbindung heraus vorzunehmen. Diese Gesprächsverbindung kann auch eine Konferenzverbindung darstellen, bei der von einem Teilnehmer eine Verbindung zwischen ihm und einem zweiten und mindestens noch einen weiteren Teilnehmer hergestellt wird. Der die Konferenz einleitende Teilnehmer hat als Einberufer die Möglichkeit in unterschiedliche Verbindungszustände einzutreten. Nach der bereits erwähnten Rückfrage zu einem nicht an der Konferenzverbindung beteiligten Endgerät kann er erneut in die Konferenz eintreten und er hat die Berechtigung weitere Konferenzteilnehmer in die Konferenzverbindung hereinzunehmen. Es ist auch eine Nichtrückkehr aus den Rückfrageverbindungen in die Konferenzverbindung zugelassen.

Für mehrere an die Kommunikationsvermittlungsanlage angeschlossene Endgeräte kann eine besondere Konstellation insofern bestehen, als ein Verbindungsherstellungsversuch, der für ein bestimmtes Endgerät dieser Gruppe bestimmt ist, an allen weiteren zur Gruppe gehörenden Endgeräten gleichzeitig signalisiert wird. Bei wenigstens zwei derartigen Endgeräten können diese beispielsweise einem Chefteilnehmer und der Sekretärin zugeordnet sein. Die Endgeräte dieser Benutzergruppe können mit Funktionen ausgestattet sein, wie sie üblicherweise für in sogenannten Reihenanlagen eingesetzte Endgeräte üblich sind.

Dies bedeutet, daß das vermittlungstechnische Belegen von Anschlußleitungen, die Herstellung von Internverbindungen und die Inanspruchnahme von Leistungsmerkmalen auf Tastenbetätigung hin erfolgt. Diese Funktionen werden durch in die Kommunikationsanlage integrierte Programme realisiert. Der hierfür erforderliche Informationsaustausch zwischen den Endgeräten und der Kommunikationsanlage ist durch eine Teilnehmersignalisierungsprozedur in einem zwischen der Anlage und den Endgeräten angeordneten Signalisierungskanal möglich. Durch die darüber übertragenen Signalisierungsinformationen erfolgt dann auch die Steuerung der optischen Anzeigen, die über vermittlungstechnische Zustände des eigenen Endgerätes und der übrigen Endgeräte der genannten Gruppe informieren.

Der Erfindung liegt die Aufgabe zugrunde, Handhabungen am Fernsprechendgerät im Zusammenhang mit Konferenzverbindungen für die infragekommende Benutzergruppe den für diese maßgeblichen arbeitsorganisatorischen Gegebenheiten optimal anzupassen. Insbesondere soll dies für mindestens zwei in der geschilderten besonderen Konstellation zueinander stehenden Endgeräte zutreffen.

Dies wird ausgehend von der eingangs geschilderten programmgesteuerten Kommunikationsanlage dadurch erreicht, daß insofern vom ersten Kommunikationsendgerät aus aufgrund seines Einberuferstatus die Konferenzverbindung zwischen den übrigen renzteilnehmern in den Haltzustand übergeführt wurde und eine Verbindungsherstellung zu dem zweiten Kommunikationsendgerät erfolgt ist, daß nach diese Verbindungsherstellung durch die Betätigung einer Sonderfunktionstaste aufgrund der damit zur Kommunikationsanlage übermittelten Tastenidentifikationsinformation und aufgrund der daraufhin aus dem zugeordneten permanenten Speicherbereich der Datenbasis ausgelesenen vermittlungstechnischen Prozeduren durch die Rechnersteuerung sowohl die Auslösung der zwischen dem ersten und dem zweiten Kommunikationsendgerät bestehenden Verbindung als auch gleichzeitig die Übermittlung einer besonderen Signalisierungsinformation zu dem zweiten Kommunikationsendgerät veranlaßt wird, daß aufgrund dieser besonderen Signalisierungsinformation automatisch eine der Rufannahme entsprechende Meldung erzeugt und damit die Verbindungsaufbauprozedur eingeleitet wird und somit die Durchschaltung zu der zwischen den übrigen Endgeräten der ursprünglichen Konferenzteilnehmer gehaltenen Konferenzverbindung erfolgt und daß durch die Rechnersteuerung der Einberuferstatus anstelle des ersten Kommunikationsendgerätes dem zweiten Kommunikationsendgerät zugeordnet wird.

Als erfindungswesentlich ist anzusehen, daß durch die erfindungsgemäß vorgesehene Sonderfunktionstaste die von dem ersten Endgerät aufgebaute Konferenzverbindung zu dem zweiten Endgerät vermittelbar ist ohne daß der betreffende Teilnehmer hinsichtlich des Einleitens zusätzlicher Prozeduren in irgend einer Weise aktiv zu werden braucht. Es sind hierzu nur geringfügige Erweiterung der bereits implementierten Verbindungsaufbauverfahren erforderlich. Mit der Betätigung der besonderen Funktionstaste werden Meldungen generiert, die ein Auslösen der zwischen den beiden Endgeräten bestehenden aktuellen Verbindung und gleichzeitig die Erzeugung einer Meldung im Endgerät bewirken, die der bei einer Rufannahme im Endgerät erzeugten Meldung entspricht. Das ursprünglich die Konferenzverbindung aufbauende Endgerät tritt aus dieser Konferenzverbindung aus und das im Rahmen dieser genannten Konstellation zugeordnete andere Endgerät erhält automatisch den Einberuferstatus. Dabei ist der betreffende Teilnehmer von jeglicher Tätigkeit im Zusammenhang mit der Herstellung der Verkehrsbeziehung zu den ursprünglichen Konferenzteilnehmern freigestellt. Durch den Einsatz von Mikroprozessoren, der auch die Verlagerung eines Teils der in der Kommunikationsanlage realisierten Funktionen, insbesondere Leistungsmerkmal - und kommunikationsendgeräteindividuelle Eingabe- und Ausgabefunktionen in das jeweilige Endgerät ermöglicht, ist die genannte "Annahme"-Meldung in einfachster Weise zu generieren. Die genannte besondere Konstellation, in der das erfindungsgemäße Verfahren besonders sinnvoll ist kann beispielsweise für Chef-/Sekretärin-Sprechstellen vorliegen.

Die im Zusammenhang mit der Zuweisung einer aufgebauten Konferenzverbindung an das andere Endgerät erforderliche Verbindungsherstellung zwischen den Endgeräten kann durch die Betätigung einer entsprechenden Leitungstaste eingeleitet werden.

Gemäß einer weiteren Ausbildung der Erfindung ist im Zusammenhang mit einer Konferenzverbindung der Hinweis auf eine derartige Konferenzverbindung in einem Verbindungsspeicherabschnitt eines ersten dynamisch zugeordneten Speichers einspeicherbar. Bei der Abwicklung üblicher Verbindungen wird in einer solchen Verbindungsspeicherabschnitt jeweils eine Kennung für die an einem Verbindungsaufbau oder an einer bestehenden Verbindung beteiligten Kommunikationsendgeräte eingespeichert. Die für eine Konferenzverbindung eingespeicherte Kennzeichnung verweist auf einen Abschnitt eines zweiten bei einer Konferenzverbindung dynamisch zugeordneten Speichers. In diesen sind sowohl jeweils eine Kennung der an der Konferenzverbindung beteiligten Kommunikationsendgeräte als auch die Adresse des jeweiligen Verbindungsspeicherabschnittes durch die Speichersteuerung eingespeichert sind. Nach Herstellung der Konferenzverbindung durch das erste Kommunikationsendgerät enthält der Verbindungsspeicherabschnitt als endgerätbezogenen Eintrag lediglich eine den Einberuferstatus definierende Kennung dieses Endgerätes in einem diesen Status charakterisierenden Speicherplatz. Mit der Zuweisung der Konferenzverbindung wird diese Kennung gelöscht und durch die Kennung des zweiten Kommunikationsendgerätes ersetzt.

In dem Verbindungsspeicher sind zur Reduzierung des für die Verwaltung der einzuspeichernden Informationen notwendigen Programmieraufwandes lediglich drei gerätebezogene Einträge vorgesehen. Diese betreffen beispielsweise die Kennung für die an einer aktuellen Gesprächsverbindung beteiligten Endgeräte und die Kennung für ein Endgerät, das sich im Haltezustand befindet. Bezogen auf eine Konferenzverbindung erfolgt eine Erweiterung um einen Speicherplatz, der der Aufnahme einer Kennung für eben diese Konferenzverbindung dient. Durch entsprechend implementierte Steuerungsabläufe erfolgt mit der Zuweisung der Konferenzverbindung an das andere Endgerät - ohne der Notwendigkeit einer zusätzlichen Prozedur - automatisch ein Wechsel des Informationsinhaltes in dem einen Einberufer einer Konferenz charaktirisierenden Speicherplatz im Verbindungsspeicher. Die Kennungen derjenigen Endgeräte die an der zugewiesenen Konferenzverbindung noch beteiligt sind, wurden als konferenzverbindungspezifische Daten in dem zugehörigen Konferenzspeicherabschnitt eingetragen.

Gemäß einer Weiterbildung der Verbindung wird zur Verbindungsherstellung zwischen den Konferenzteilnehmern ein als Teil des Koppelnetzes fungierender Konferenzbaustein herangezogen. Es wird innerhalb der vorhandene Durchschaltemöglichkeiten für das ursprünglich die Konferenz aufbauende Kommunikationsendgerät ein Port zur Sicherstellung eine Rückkehrmöglichkeit in die Konferenzverbindung verfügbar gehalten.

Es ist somit gewährleistet, daß die denkbare Möglichkeit der Rückkehr des ersten Endgerätes in die Konferenzverbindung im Bedarfsfalle auch tatsächlich vollzogen werden kann.

Weitere vorteilhafte Ausgestaltungen der Erfindung sind den restlichen Unteransprüchen zu entnehmen.

Die Erfindung wird im folgenden anhand eines schematisch dargestellten Ausführungsbeispiels näher erläutert.

Dabei zeigt
- Fig. 1: die logische Verbindung einer besonderen Gerätekonstellation im Zusammenhang mit einer Konferenzverbindung sowie grundsätzliche Schaltungskomponenten einer digitalen Kommunikationsanlage,
- Fig. 2: Die Basisstruktur der Steuerung einer solchen digitalen Kommunikationsanlage,
- Fig. 3: Die Struktur eines Verbindungspeicher- und speicherabschnittes im Zusammenhang mit einer renzverbindung,
- Fig. 4: ein Diagram mit den, insbesondere auf die Endgeräte der besonderen Endgerätekonstellation bezogenen Meldungen und Verbindungs- bzw. Signalisierungszuständen.

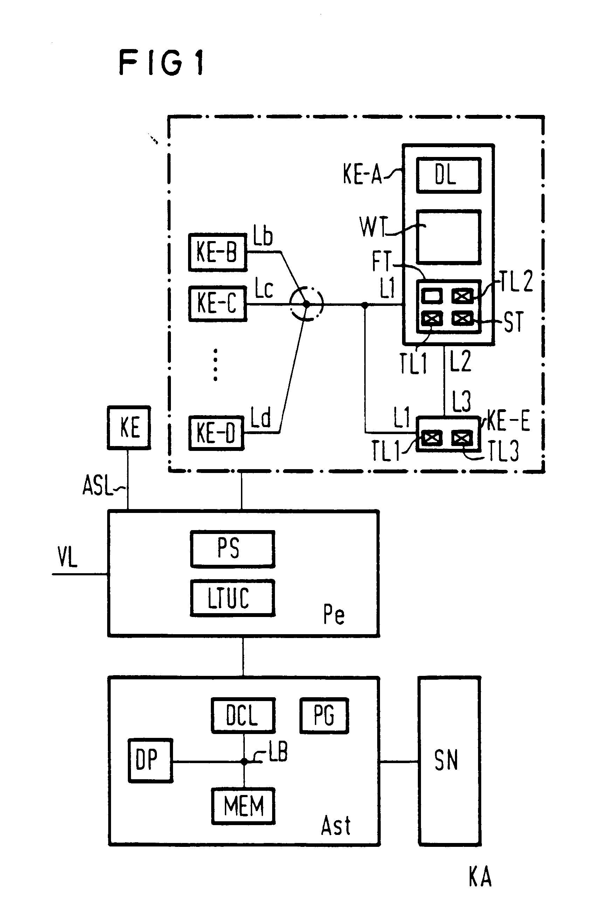

Zentraler Bestandteil der in der Figur 1 schematisch dargestellten digitalen Kommunikationsanlage KA ist ein Koppelnetz SN, über das Kommunikationsendgeräte - schematisch angedeutet durch die Endgeräte KE, KE-A bis KE-E - miteinander bzw. mit zu einer öffentlichen Vermittlungsanlage oder zu anderen Nebenstellenanlagen führenden Leitungen VL verbindbar sind. Das zentrale Koppelnetz SN steht unter dem Steuereinfluß einer zentralen Anlagensteuerung ASt die als Rechnersteuerung die hierarchisch oberste Strukturebene der Kommunikationsanlage darstellt. Diese Strukturebene wird durch einen zentralen Steuerprozessor DP gebildet, der das Zusammenwirken aller Bausteine und Module der Kommunikationsanlage KA koordiniert. Neben einer takterzeugenden Einrichtung PG ist die Anlagensteuerung weiterhin mit einer vorgeschalteten Zugangssteuerung DCL und einem Speicher MEM ausgestattet. Die Einheit DCL dient als Schnittstelle zur Peripherie, die als "Master" einer HDLC-Verbindung die Protokollbehandlung auf dem Signalisierungskanal durchführt. In dem Speicher MEM sind beispielsweise die vermittlungstechnische Datenbasis und alle vermittlungstechnisch relevanten Programme und die dazugehörigen Daten abgespeichert. Wesentliche Funktionen des zentralen Steuerprozesses DP sind also die Speicherung und das anforderungsgerechte Abarbeiten von vermittlungstechnischen Programmen und die Steuerung und Überwachung des lokalen Busses LB. An diesen sind peripheriezugewandt, die Einheiten DCL und das Koppelnetz SN angeschlossen. Zusätzliche Funktionen des zentralen Datenprozessors DP sind beispielsweise betriebstechnische Abwicklungen und sicherheitstechnische Anzeigen. Wesentlicher Bestandteil der Peripherie Pe sind periphere Schnittstellen PS, denen eine Schnittstellensteuerung LTUC zugeordnet ist. Diese steuert den Verbindungsaufbau zwischen den Kommunikationsendgeräten KE, wobei hierfür ein programmtechnisch realisiertes Aufbauverfahren vorgesehen ist. In den Schnittstellen PS sind die mit den Kommunikationsendgeräten KE die jeweiligen Signalisierungsprotokolle abwickelnden Verfahren bzw. Programmodule vorwiegend realisiert. Die der Berechtigungsprüfung hinsichtlich Dienste, Leistungsmerkmal usw. sowie der Verbindungssteuerung über das digitale zentrale Koppelnetz SN dienenden Verbindungsaufbauverfahren bzw. Programmodule sind im Speicher MEM der zentralen Anlagensteuerung ASt implementiert.

An die Kommunikationsanlage können neben digitalen Kommunikationsendgeräten auch herkömmliche Endgeräte mit analoger Übertragung jeweils über eine Anschlußleitung ASL angeschlossen werden. Dies erfolgt für eine jede periphere Schnittstelle PS für die digitalen Kommunikationsendgeräte über eine nichtdargestellte und die entsprechende digitale Informationsübertragung beherschende Satzbaugruppe und für die analogen Kommunikationsendgeräte durch eine gleichfalls nicht weiter dargestellte und entsprechend angepaßte Satzbaugruppe. Diese Satzbaugruppen sind für jede Schnittstelle PS mehrfach vorhanden und dienen u.a. dazu, die unterschiedlichen Signalisierungsinformationen von den einzelnen Endgeräten auf ein innerhalb der Kommunikationsanlage KA einheitlich verwendetes Format umzuwandeln. An jede Satzbaugruppe sind jeweils eine Mehrzahl von Leitungsanschlüssen zugänglich.

In der Figur 1 sind noch weitere Kommunikationsendgeräte KE-A bis KE-E angedeutet, die jeweils über eine zB. zweiadrige Anschlußleitung ASL in gleicher Weise wie das Kommunikationsendgerät KE angeschlossen sind. Zwischen den Endgeräten KE-A und KE-E soll eine besondere Konstellation vorgesehen werden. Diese Endgeräte sollen beispielsweise Chef-/Sekretärteilnehmer darstellen. Es wird zwischen diesen beiden Endgeräten durch die Betätigung der Taste TL2 am Endgerät KE-A, das beispielsweise die Sekretär-Teilnehmerherstelle darstellt bzw. der Taste TL3 am Endgerät KE-E, das beispielsweise das Chef-Endgerät darstellt ein vollständiger Verbindungsaufbau zu dem jeweils anderen Endgerät durchgeführt. Weiterhin soll bei einer Verbindungsanforderung zu dem Endgerät KE-A diese Tatsache sowohl an diesem Endgerät als auch an dem in dieser besonderen Konstellation zu zu diesem Endgerät stehenden anderem Endgerät KE-E signalisiert werden. Diese Signalisierung kann an jedem Endgerät in unterschiedliche weise erfolgen. So könnte beispielsweise am Endgerät KE-A die der softwaremäßig definierten Leitung L1 zugeordnete Taste TL1 leuchten und am Endgerät KE-E könnte neben der Aktivierung der Leuchtanzeige zusätzlich ein akustischer Ruf erfolgen. Diese "Pseudoleitung L1" liegt demnach an den beiden Endgeräten auf. Dies könnte grundsätzlich auch noch an weitern Endgeräten der Fall sein. Die Gesammtheit diese Endgeräte würde dann eine geschlossene Benutzergruppe bilden, zwischen denen Verbindungen durch einfache Tastenbetätigungen aufgebaut werden können. Eine Verbindungsanforderung, die voraussetzungsgemäß an allen Endgeräten der Gruppe signalisiert wird kann bestimmungsgemäß an einem Endgerät, beispielsweise an dem der Sekretärteilnehmerstelle zugeordneten Endgerät KE-A angenommen werden.

Für die in der Figur 1 angedeuteten Kommunikationsendgeräte KE-A bis KE-E, die jeweils über eine z.B. zweiadrige Anschlußleitung angeschlossen sind, ist innerhalb des strichiert umrandeten Feldes ein logischer Verbindungsplan gezeigt, der die Situation bei einer bestehenden Konferenzverbindung veranschaulicht. Durch die gewählte Symbolik soll angedeutet werden, daß von dem Endgerät KE-A eine Konferenzverbindung mit den Teilnehmern der Endgeräte KE-B bis KE-D aufgebaut wurde. Dies erfolgt über die "Softwareleitung" L1, die gleichzeitig an dem Endgerät KE-E aufliegt. Eine solche mehrfach aufliegende Leitung wird in der Fachwelt als "Mulap"-Leitung (multi line appearance) bezeichnet. Für das Endgerät KE-A ist angedeutet, daß neben einer Wahltastatur TW der Einsatz von Funktionstasten FT wie ein Display DL vorgesehen ist. Diese Ausstattung ist in gleicherweise für die übrigen digitalen Endgeräte vorgesehen. Diese Funktionstasten können auch sogenannte Leitungstasten TL1 bis TL3 darstellen, über die softwaremäßig zugeordnete Leitungen definiert sind und durch deren Betätigung eine Leitungsbelegung bzw. ein Verbindungsaufbau eingeleitet werden kann. Zumindest die Endgeräte KE-A und KE-E können beispielsweise zu einer Gruppe von angeschlossenen Endgeräten gehören, für die Funktionen realisiert sind, die normalerweise sogenannten Reihenanlagen zugeordnet sind. Diese Funktionen werden üblicherweise als Key-Leistungsmerkmale bezeichnet. Dies bedeutet u.a. daß beim Aufbau von Verbindungen durch die Betätigung einer der genannten leitungsbelegenden Tasten die Vermittlungszustände der übrigen zu dieser speziellen Gruppe gehörenden Endgeräte an einem Endgerät jeweils signalisiert werden.

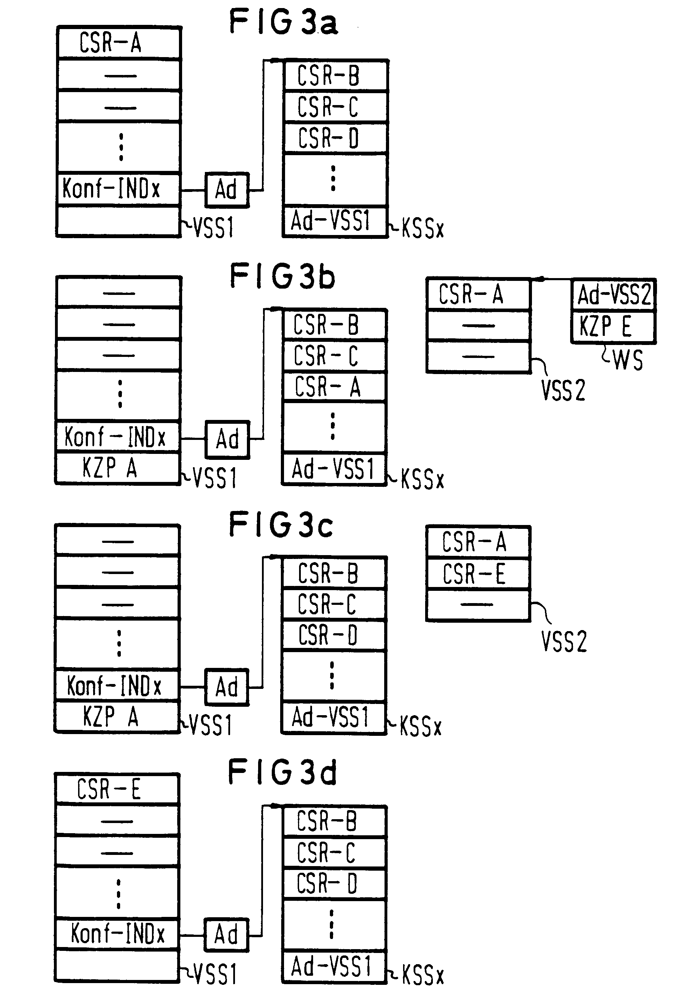

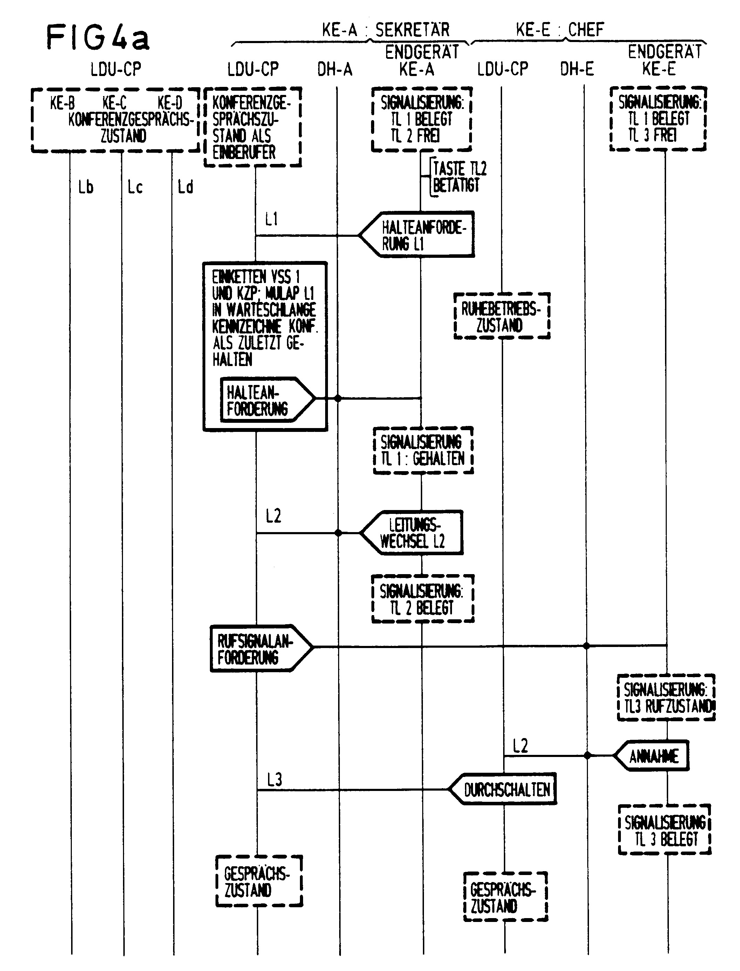

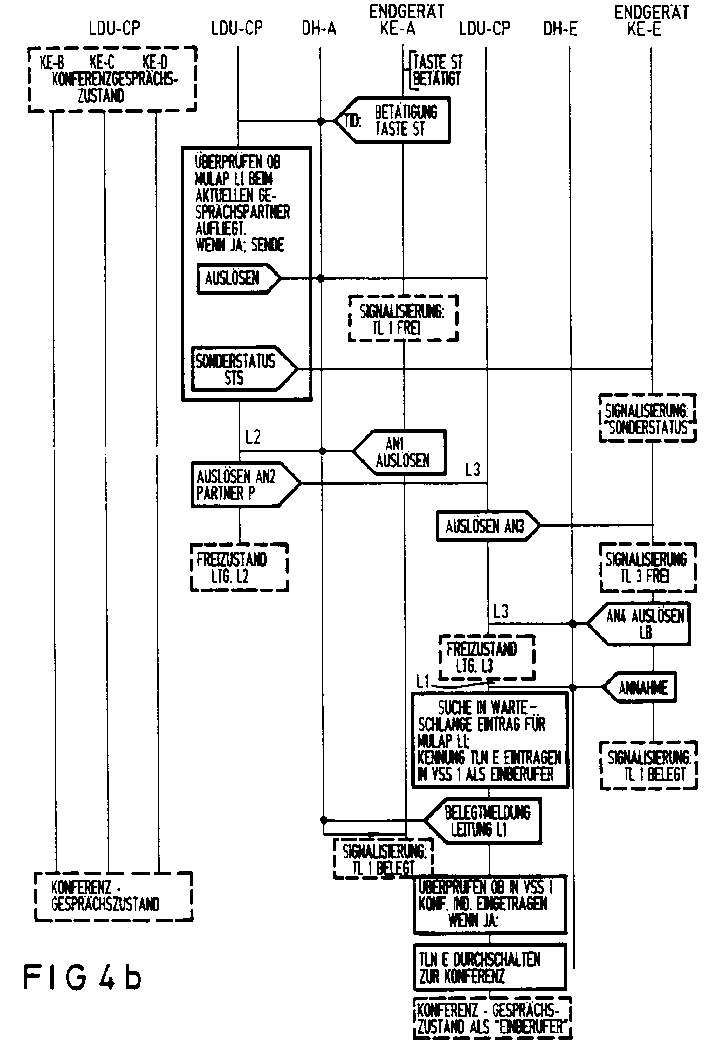

Um eine Konferenzverbindung aufzubauen wird vom Endgerät KE-A aus die Rufnummer des Endgerätes KE-B bzw. des als Synonym dafür stehenden Teilnehmers B gewählt. Die Kommunikationsanlage stellt diese Zweierverbindung in an sich bekannter Weise her, indem die Rechnersteuerung auf in der Datenbasis abgespeicherte teilnehmerendgerätespezifische Daten zurückgreift. In diesem Zusammenhang werden dann teilnehmerbezogene Kennungen in einen Verbindungsspeicher bzw. in ein Warteschlangenspeicherelement eingespeichert. Daran anschließend wird in Zusammenwirkung mit den entsprechenden Programmodulen für die Einstellung und der Steuerung des Koppelnetzes die Verbindung zwischen den Endgeräten KE-A und KE-B über das Koppelnetz SN durchgeschaltet. Der Teilnehmer A geht in den Rückfragezustand zu einem potentiellen Konferenzverbindungspartner C. Der Aufbau der frageverbindung erfolgt in an sich bekannter Weise. Nach der Herstellung dieser Rückfrageverbindung betätigt der Teilnehmer A eine an seinem Endgerät KE-A vorhandene Konferenztaste bzw. er erzeugt eine Konferenzverbindungskennung, falls der Teilnehmer C an der Konferenzverbindung teilnehmen möchte. Aufgrund dieses vom Teilnehmer A erzeugten Anreizes wird durch die Rechnersteuerung auf freie Konferenzbausteine und. auf freie Speicherabschnitte eines Konferenzspeichers geprüft. Ist ein solcher Baustein bzw. ein freier Konferenzspeicherabschnitt verfügbar, so werden diese durch die Steuerung den Teilnehmer A jeweils zugeordnet. Die Rechnersteuerung stellt damit die Konferenzverbindung für die Teilnehmer A, B und C her. Die Aufnahme eines vierten Teilnehmers D durch den als Einberufer fungierenden Teilnehmer A in diese Konferenzverbindung erfolgt in gleicher Weise. Die Teilnehmer B bis D werden in den renzspeicherabschnitt umgespeichert und nur der Teilnehmer A bleibt als Einberufer in dem Verbindungsspeicher. Der Teilnehmer A hat nun die Möglichkeit die von ihm aufgebaute Konferenzverbindung durch die Betätigung einer Sonderfunktionstaste ST dem Teilnehmer E, der vorzugsweise ein Chef-Teilnehmer ist, zuzuweisen. Dies wird im Zusammenhang mit den nachfolgenden Figuren, insbesondere im Zusammenhang mit den Figuren 3 und 4 näher erläutert.

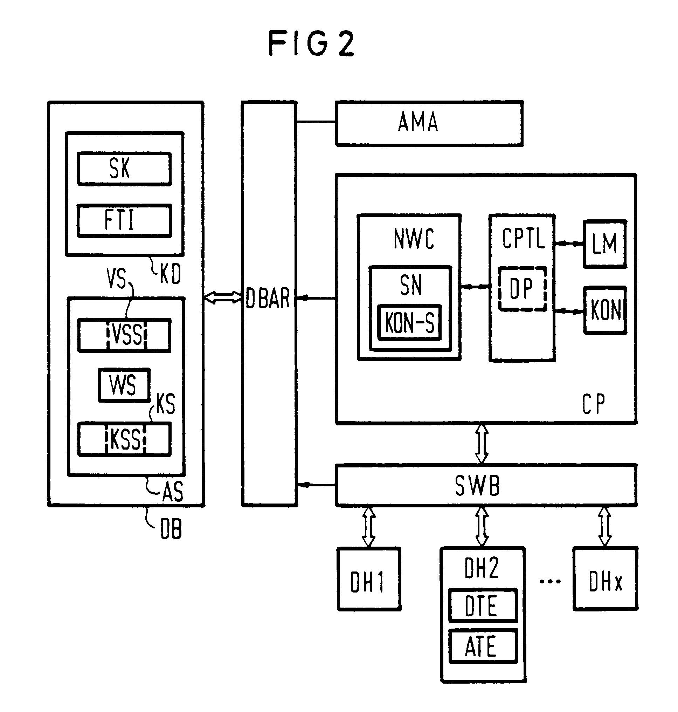

Die in der Figur 2 dargestellte Basisstruktur der Steuerung einer digitalen Kommunikationsanlage hat einen modularen Charakter und weist zwei hierarchische Ebenen der Programmsteuerung auf. Eine von ihnen dient mittels jeweils an eine Kommunikationsendgeräteart angepaßten Leitungstechnik-Programmodulen DH1, DH2 ... DHx (device handler) der Steuerung peripherer Geräte. Zu diesen zählen nicht nur die an die peripherie angeschlossenen Kommunikationsendgeräte KE ... , sondern auch zentrale leitungstechnische Einrichtungen wie Anschaltesätze und Koppelfeld. Jedes dieser Leitungstechnik- Programmodule DH bietet eine systemeinheitliche Schnittstelle zur Vermittlungstechnik-Strukturebene, die im vorliegenden Fall durch ein Vermittlungsprozedur-Programmodul CP repräsentiert ist. In der Leitungstechnik-Strukturebene DH sind den einzelnen Endgerätearten zugeordnete sogenannte Leitungstechnikprogrammmodule DTE für digitale Endgeräte und ATE für analoge Endgeräte im Programmodul DH2 angedeutet. In der Vermittlungssteuerungs-Strukturebene CP sind Teilmodule für unterschiedliche Teilaufgaben der Verbindungssteuerung vorgesehen. Der Informationsaustausch zwischen der Leistungstechnik-Strukturebene und der Vermittlungstechnik-Strukturebene erfolgt mittels definierte Meldungen, die über eine Software-Busstruktur SWB übertragen werden. Diese kann als integraler Standteil des Betriebssystems des vermittlungsanlagenrechners angesehen werden. Das Vermittlungssteuerungs-Programmodul CP, die Leitungstechnik- Programmodule DH1, DH2 ... DHx und der software Bus SWB haben mittels Datenbasis Zugriffsroutinen DBAR Zugang zur Datenbasis DB der gesammten Kommunikationsanlage. Neben dem Vermittlungsprozedur-Programmodul CP sind weitere Module vorgesehen, von denen mit AMA beispielhaft die Betriebstechnik-Programmodule angedeutet sind. Diese dienen zur Abwicklung von betriebstechnischen Aufgaben. Zumindest einem Teil von ihnen ist gleichfalls über definierte Datenbasis-Zugriffsroutinen die Datenbasis DB zugänglich. Die Leitungstechnik-Programmodule DH1, DH2 ... DHx sind kommunikationsendgeräteartenspezifisch so ausgebildet, daß sie jeweils das Signalisierungsverfahren und die Benutzeroberfläche der entsprechenden kommunikationsendgeräteart steuern. Das Vermittlungsprozedurprogrammodul CP ist endgeräteartenunabhängig und kommunikationsdiensteunabhängig derartig strukturiert, daß es den maximalen Funktionsumfang der peripheren Geräte und Einrichtungen steuerungstechnisch beherrscht. Die Aufgaben des Vermittlungsprozedurprogrammoduls CP umfassen also die für die Steuerung des Verbindungsaufbaus und des Verbindungsabbaus notwendigen Teilprozesse der gesammten Vermittlungsprozedur. So werden zum Beispiel Berechtigungen geprüft und Wahlkontrollen durchgeführt. Es erfolgt auch eine Signalisierung von vermittlungstechnischen Zuständen zwischen den Kommunikationsendgeräten und es ist ein Aktivieren und ein Deaktivieren von Vermittlungstechnik-Leistungsmerkmalen aus den unterschiedlichen vermittlungstechnischen Zuständen heraus durchführbar.

Wesentlicher Bestandteil der Vermittlungstechnik-Strukturebene CP ist das Vermittlungsprozedur-Programmodul CPTL (call processing trunkline) das wiederrum in nicht dargestellte unterschiedlichen Teilmodule aufgeteilt ist. Die vermittlungstechnischen Steuerprozeduren werden von einem in der Figur 2 innerhalb der Einheit CPTL schematisch dargestellten Prozessor DP der zentralen Rechnersteuerung durchgeführt. Stellvertretend für die in der Anlage vorgesehenen Leistungsmerkmal-Programmodule ist das Modul LM gezeigt. Zu den Leistungsmerkmal-Programmodulen ist auch ein Netzwerksteuer-Programmodul NWC zu zählen, mit dem die gesammte logische Verbindungsspeichersteuerung und die Steuerung des Koppelfeldes SN realisiert wird. Weiterhin ist eine Einheit CON vorgesehen, die auf das Leistungsmerkmal "Konferenzverbindungen" hinweist. Die in der Figur 2 gestrichelte stellung dieser Einheit CON bringt zum Ausdruck, daß das Leistungsmerkmal zur "Führung von Konferenzverbindungen" nicht ein gesondertes Leistungsmerkmal-Programmodul erfordert, sondern auf der Grundlage der in der Kommunikationsanlage implementierten Standard-Vermittlungsprozeduren durchgeführt wird. Durch den Block SN innerhalb des Netzwerk-Steuerprogrammoduls NWC wird angedeutet, daß damit die Steuerung des Koppelnetzes SN und die Ansteuerung von als Teil dieses Koppelnetzes vorhandenen Konferenzbausteinen KON-S realisiert wird.

Die Datenbasis DB, die zum Beispiel dem Speicher MEM der Steuerung ASt zugeordnet ist, enthält Permanentspeicher. Im Speicherbereich KD sind beispielsweise als permanente Daten die Systemskonfigurationsdaten SK abgespeichert. Dies betrifft auch die Kundenspezifisch festgelegte Zuordnung der einzelnen an die Kommunikationsanlage KA angeschlossenen Endgeräte KE zueinander. So ist z.B. auch die Information über die für die Endgeräte KE-A und KE-E bestehende besondere Konstellation als Chef-/Sekretärsprechstellen abgespeichert. Grundsätzlich wird bei jedem Einleiten einer Verbindungsaufbauprozedur durch ein Kommunikationsendgerät in diesen Kundendatenspeicher KD der Datenbasis ein dem jeweiligen Gerät zugeordneter Speicherbereich abgefragt. Im Rahmen dieser Abfrage wird das rufende Kommunikationsendgerät eindeutig identifiziert. Die darin abgespeicherten Dienste und Berechtigungen hinsichtlich benutzbarer Leistungsmerkmale werden gelesen und gegebenenfalls in einem dynamische Daten speichernden Speicherbereich AS der Datenbasis gespeichert. Gleichzeitig werden die darin enthaltenen physikalische Funktionen, wie z.B. die verwendeten Endgeräteschnittstellen gelesen und gespeichert. Diese Daten werden im Laufe des Verbindungsaufbaues und bei Einleiten vermittlungstechnische Prozeduren bewertet bzw. abgefragt. Weiterhin sind im Permanentspeicherbereich KD Informationen u.a. bezüglich der leitungsbelegenden Funktionstasten enthalten. Eine Funktionstaste stellt auch die erfindungsgemäß eingesetzte Sonderfunktionstaste ST dar, die am Endgerät KE-A vorhanden ist und deren Bedeutung später noch beschrieben wird. In dem Permanentspeicherbereich FTI sind beispielsweise die Tastenidentifikationsdaten gespeichert. Weiterhin sind darin diejenigen Informationen aus denen die aufgrund einer Tastenbetätigung einzuleitenden Vermittlungstechnischen Prozeduren entnehmbar sind abgespeichert. Vorab werden die abgespeicherten Tastenidentifikationsdaten mit denjenigen Daten verglichen, die durch die Betätigung einer Funktionstaste im jeweiligen Kommunikationsendgerät gebildet und an die Kommunikationsanlage übermittelt wurden. Durch die Betätigung einer solchen Taste an einem Kommunikationsendgerät, dem die sogenannten Key-Funktionen zugeordnet sind, kann also durch die Kommunikationsanlage direkt die eigene Anschlußleitung belegt werden, es kann das Endgerät mit einer an die Kommunikationsanlage angeschlossenen Amtsleitung verbunden oder ein Verbindungsaufbau zu einem anderen internen Kommunikationsendgerät durchgeführt werden. In dem für die endgerätebezogenen Informationen vorgesehenen Permanentspeicherbereich KD ist wie bereits erwähnt demnach eingetragen, daß die besondere Endgerätekonstellation KE-A und KE-E über die sogenannte "Mulap"-Leitung L1 angesteuert wird. Diese gespeicherten Informationen ergeben dann gleichzeitig einen Hinweis auf die daran gekoppelten vermittlungstechnischen Prozeduren. In diesem speziellen Fall bedeutet dies u.a., daß eine ankommende Verbindung an den beiden Endgeräten signalisiert wird.

Für dynamische Daten ist in der Datenbasis DB der Speicherbereich AS vorgesehen, wobei dieser Speicherbereich einen Arbeitsspeicher der Speicheranordnung MEM der Anlagensteuerung ASt darstellen kann. Bei jeder ankommenden Verbindung oder bei jedem Verbindungsaufbau wird ein dynamischer Speicherabschnitt VSS eines Verbindungsspeichers VS der Verbindung zugeordnet. Im Zusammenhang mit dem Verbindungsaufbau werden auch noch weitere Speicherelemente herangezogen, die als sogenannte Warteschlangenelemente eines Warteschlangenspeichers WS dienen. Im Zusammenhang mit einer Konferenzverbindung wird weiterhin ein Konferenzspeicher KS verwendet, in dessen einzelne Speicherabschnitte KSS konferenzverbindungsspezifische Daten eingeschrieben werden.

Für die in der Fig. 1 innerhalb des strichliert angedeuteten Feldes angegebene Konferenzverbindungssituation zwischen den insgesammt beteiligten Endgeräten KE-A bis KE-E sind die durch die Anlagensteuerung in die Speicherabschnitte eines Verbindungsspeichers und eines Konferenzspeichers eingeschriebenen Informationen in den Figuren 3a bis 3d strukturell dargestellt. Es wird davon ausgegangen, daß vom Endgerät KE-A (Sekretär-Sprechstelle) aus eine Konferenz mit den Teilnehmern B bis D über die ihnen zugeordneten Endgeräte KE-B bis KE-D in der bereits im Zusammenhang mit der Figur 1 beschriebenen Weise aufgebaut wurde. Hierzu wurde ein Verbindungsspeicherabschnitt VSS1 eines Verbindungsspeichers zugeordnet. In einem solchen Verbindungsspeicher werden grundsätzlich wenige z.B. lediglich drei die beteiligten Endgeräte definierenden Einträge aufgenommen, um den Programieraufwand u.a. für die Verwaltung dieser Verbindungsspeicher zu minimieren. Es ist beispielsweise eine Kennung für die an einer Gesprächsverbindung aktuell beteiligten Endgeräte bzw. Teilnehmer und die Kennung eines im Haltezustand befindlichen weiteren Teilnehmers vorgesehen. Diese Kennung kann jeweils auf ein spezielle Informationen enthaltendes Gerätespeicherelement verweisen. In einem solchen Gerätespeicherelement, das jeden Teilnehmer zugeordnet wird sind zusätzliche Informationen enthalten, die beispielsweise seinen Verbindungszustand und Adresseninformation für Speicherplätze enthält, in denen teilnehmerbezogene Daten entnommen werden können. Der Verbindungsspeicherabschnitt VSS1 gemäß der Figur 3a enthält als teilnehmerbezogene Kennung lediglich die Kennung CSR-A für das Endgerät KE-A bzw. für den Teilnehmer A. Außerdem enthält der Speicherabschnitt VSS1 einen Speicherplatz für eine Kennung einer Konferenzverbindung. Dieser Speicherplatz ist in der Figur mit Konf-INDx bezeichnet. 'x' kann Werte zwischen 1 und 'm' einnehmen, wobei 'm' gleich der maximalen Anzahl der zur Verfügung zu stellenden Konferenzspeicherabschnitte KSS eines Konferenzspeichers entspricht. Als Konferenzindex Konf-INDxist nicht die vollständige Adresse eines zuständigen Konferenzspeicherabschnittes eingetragen sondern lediglich eine Indexzahl 1 bis 'm' da dadurch der notwendige Speicherplatzbedarf reduziert wird. Der Konferenzindex wird in eine Adresse Ad umgerechnet, so daß dadurch der jeweilige ferenzspeicherabschnitt KSSx feststeht. Während in dem dungsspeicherabschnitt VSS1 lediglich die Kennung für den Einberufer der Konferenzverbindung enthalten ist, sind die Kennungen für die übrigen an der Konferenzverbindung beteiligten Endgeräte bzw. Teilnehmer im Konferenzspeicherabschnitt KSSx eines Konferenzspeichers KS enthalten. Im Ausführungsbeispiel sind dies die Kennungen für Teilnehmer B bis D. Aus der im Konferenzindex angegebenen Ordnungszahl läßt sich also die Adresse des dynamisch jeweils zugeordneten Konferenzspeicherabschnittes ermitteln, so daß gegebenenfalls die Kennungen für weitere Konferenzteilnehmer einspeicherbar sind.

Weiterhin ist in einem solchen Konferenzspeicherabschnitt, der einer jeden Konferenzverbindung zugeordnet wird, eine Kennung Ad-VSS1 des Verbindungsspeichers enthalten, in dem der die Konferenz einleitende Teilnehmer A eingetragen ist. Im "Konferenzspeicherabschnitt" KSSx können weitere verbindungstypische Daten wie z.B. die Anzahl der an der betreffenen Konferenzverbindung beteiligten Teilnehmer, die Anzahl der an der Konferenzverbindung beteiligten Amtsleitungsbündel - soweit der externe Teilnehmer in eine Konferenz hineingenommen wurden - eingespeichert sein. Es sind darin also alle eine bestimmte Konferenzverbindung beschreibende Daten eingeschrieben.

In der Figur 3b ist der Verbindungszustand dargestellt, in dem vom Endgerät KE-A aus, auf einer softwaremäßig definierten Leitung L2/L3 eine Verbindung zu dem mit dem in einer besonderen Partnerkonstellation stehenden Gerät KE-E aufgebaut ist und dieses Gerät gerufen wird. Immer wenn ein rufender Teilnehmer einen Verbindungsversuch zu einem Zielteilnehmer unternimmt werden Informationen in ein Element WS eines Warteschlangenspeichers eingeschrieben. In diesem Element ist also die Adresse des Verbindungsspeichers VSS2 eingetragen, der für die eingeleitete Gesprächsverbindung zwischen den Teilnehmern A und E bereitgestellt wurde. Weiterhin enthält dieses Warteschlangenelement WS eine Kennung eines Kennzahlpunktes KZPE. Ein solcher Kennzahlpunkt ist als Kennung für jedes "Gerät" festgelegt, das über die Anlage anzuwählen ist. Eine solche Kennzeichnung ist also für jedes einzelne Endgerät, für einen jeden Amtssatz und beispielsweise auch für eine Personensucheinrichtung und auch für die sogenannte "Mulap"-Leitung definiert.

In dem der ursprünglichen Konferenzverbindung zugeordneten Verbindungsspeicherabschnitte VSS1 ist lediglich noch der Konferenzindex und die Kennung KZPA für den Kennzahlpunkt des Endgerätes A enthalten. In diesen betreffenden Speicherplatz ist also der quasi abwesende Einberufer der ursprüngliches Konferenz weiterhin festgehalten. Damit hat man dann die Möglichkeit die Leitung L1 auszulösen falls es die spezielle Verbindungszustände erfordern. Über diesen Kennzahlpunkt des Einberufers erhält man eine Referenz für den Speichereintrag in der Datenbasis, der die der betreffenden Leitungstaste zugeordnete Leitung als - "Mulap"-Leitung L1 ausweist. Weiterhin besteht durch diesen Eintrag des Kennzahlpunktes für den Teilnehmer A die Möglichkeit in die gewissermaßen durch ihn in einen Haltezustand übergeführte ursprünglichen Konferenzverbindung erneut einzutreten. Die im Konferenzspeicherabschnitt eingetragenen Teilnehmer befinden sich weiterhin im Konferenz-Gesprächszustand, das heißt sie haben die Möglichkeit uneingeschränkt miteinander zu sprechen.

Die Figur 3c zeigt den Verbindungszustand, in dem sich der Teilnehmer E gemeldet hat. In diesem Verbindungszustand sind die Einträge in dem Verbindungsspeicher VSS1 und in den Konferenzspeicherabschnitt KSSx gegenüber den in der Figur 3b in den betreffenden Speicherabschnitten enthaltenen Einträgen unverändert geblieben. In dem Verbindungsspeicherabschnitt VSS2 ist zusätzlich der Gesprächspartner E gekennzeichnet. Dies erfolgt durch die darin eingespeicherte Kennung CSR-E für den Teilnehmer E. Die Einträge im Warteschlangenelement sind gelöscht.

In der Figur 3d ist die Situation dargestellt, nachdem während der Gesprächsverbindung zwischen den Teilnehmer A und dem Teilnehmer E durch den Teilnehmer A die Sonderfunktionstaste ST betätigt wurde. Mit der Betätigung dieser speziellen Taste werden dann die in der Figur 4 dargestellten Abläufe bzw. Meldungen iniziiert. Wie später noch beschrieben wird führen diese dazu, daß der Teilnehmer E ohne irgend welche zusätzlichen Handhabungen an seinem Endgerät automatisch in die zwischen den Teilnehmern B bis D noch bestehende Konferenzverbindung eintritt. Mit diesem Eintritt wird ihm gleichzeitig der Einberuferstatus zugeordnet. Dies ist dadurch festgelegt, daß er im Verbindungsspeicherabschnitt VSS1 mit seiner Kennung anstelle des bisher darin enthaltenen Teilnehmer A eingespeichert ist. Der Teilnehmer A hat die Konferenzverbindung verlassen und wird ausgelöst. Er ist demnach auch nicht mehr im Verbindungsspeicher.

Die übrigen an der Konferenz beteiligten Teilnehmer B bis D sind weiterhin im Konferenzspeicherabschnitt KSSx gespeichert.

In der Figur 4 sind in Bezug auf die Endgeräte, insbesondere auf die Endgeräte KE-A und KE-E diejenigen Meldungen dargestellt, die u.a. in der vermittlungstechnischen Strukturebene LDU-CP generiert werden. Außerdem sind darin die vermittlungstechnischen Zustände der einzelnen Endgeräte definiert. Weiterhin sind die an den Endgeräten KE-A und KE-E vorgenommenen Signalisierungen und die in diesen Endgeräten erzeugten und der vermittlungstechnischen Strukturebene LDU-CP übermittelten Meldungen dargestellt.

Die Figur 4 ist in die Teilfiguren 4a und 4b aufgeteilt. Es wird zunächst davon ausgegangen, daß der Teilnehmer A in der bereits geschilderten Weise eine Konferenzverbindung mit den Teilnehmern B bis D aufgebaut hat und demnach zwischen all diesen Teilnehmern eine Gesprächsverbindung besteht. In dieser Konferenzverbindung hat der Teilnehmer A den Einberuferstatus. Er kann also gegenüber den übrigen Teilnehmern, die lediglich aus der Konferenzverbindung durch Auflegen ihres Handapparates austreten können zusätzliche Leistungsmerkmale, beispielsweise die Rückfrage zu einem weiteren Teilnehmer und Wiedereintreten in diese Konferenzverbindung in Anspruch nehmen. Diese Gesprächsverbindung könnte auch zwischen an Konferenzverbindungen fest zu beteiligenden Teilnehmern stattfinden. Diese betreffenden Teilnehmer sind dann in der Datenbasis abgespeichert. Eine solche Konferenzverbindung mit festgelegten Teilnehmerkreis könnte durch die Betätigung einer Konferenztaste am Teilnehmerendgerät des Teilnehmers A eingeleitet werden. Das Rechnersystem prüft dann selbsttätig den Verbindungszustand der übrigen für diese Konferenzverbindung fest vorgesehenen Teilnehmer und stellt die Konferenzverbindung mit denjenigen Teilnehmern her, die sich im Freizustand befinden.

Am Endgerät KE-A wird die Leitung L1 als belegt und die Leitung L2 als frei signalisiert. Während der bestehenden Konferenzverbindung wird durch den Teilnehmern A die Taste TL2 betätigt um eine Verbindung zu dem Teilnehmer E herzustellen.

Daraus wird zunächst eine Meldung abgeleitet, die das Vermittlungsprozedur-Programmodul veranlaßt, die Leitung L1, - das heißt die übrigen Teilnehmer der Konferenzverbindung bezogen auf den Teilnehmer A - in eine Halteposition überzuführen. Die Gesprächsverbindung zwischen den übrigen Teilnehmern B bis D der ursprünglichen Konferenzverbindung bleibt bestehen. Es wird die Einkettung des Verbindungsspeichers VSS1 (Figur 3) und der "Mulap"-Leitung L1 in ein Warteschlangenspeicherelement, sowie die Kennzeichnung der Konferenzverbindung als zuletzt gehaltene Verbindung vorgenommen. Die Vermittlungstechnik generiert eine Halteanforderung. Daraufhin wird am Endgerät KE-A die Leitung L1 als gehaltene Leitung signalisiert und es erfolgt eine Meldung, die den Übergang in diese Halteposition für die Konferenzteilnehmer bewirkt. Die im Endgerät KE-A mit der Betätigung der Leitungstaste TL2 gebildete Anforderung für den Leitungswechsel zu der die Verbindung zum Teilnehmer E ermöglichenden "Software"-Leitung L2, führt dann unter Einbeziehung des Leitungstechnik-Programmoduls DH-A zu den Verbindungsherstellungsversuch über die für die Interkommunikation zwischen den Teilnehmern A und E vorgesehene Leitung L2. Durch eine entsprechende Charaktirisierung in dem permanenten Speicher KD der Datenbasis DB (Figur 2) kann automatisch eine Wahlinformation für die Verbindungsanforderung mit dem Teilnehmer E erzeugt werden. Am Endgerät KE-A wird die in Form einer Leitungstaste TL2 vergegenständlichte Leitung L2 als belegt gekennzeichnet. Aus der vermittlungstechnischen Strukturebene erfolgt die Anforderung für die Anschaltung der Rufsignale für das Endgerät KE-E. An diesem Endgerät wird die Signalisierung bezüglich der Leitung L3 derart geändert, daß der Rufzustand angezeigt wird. Aufgrund der im Endgerät erfolgten Meldung über die Verbindungsannahme, die über das Leitungstechnik-Programmodul DH-E dem vermittlungstechnischen Modul LDU-CP zugeleitet wird, erfolgt eine Meldung die das Durchschalten der Verbindung zwischen L2 und L3 nach sich zieht. Es betrifft somit eine Verbindung zwischen den Endgeräten KE-A und KE-E. Die Leitung L3 wird am Endgerät KE-E als belegt signalisiert. Die Meldung "Durchschalten" bewirkt gleichzeitig, daß für das Endgerät KE-A der bis dahin angelegte Freiton abgeschaltet wird.

In der Figur 4b sind die Meldungen und Signalisierungs- bzw. Leitungszustände dargestellt, die durch die während des Gesprächszustandes zwischen dem Teilnehmer A und dem Teilnehmer E erfolgende Betätigung der Sonderfunktionstaste ST am Endgerät K-A - also beispielsweise am Sekretär-Endgerät - gestartet werden. Die Betätigung dieser Sonderfunktionstaste ST wird vermittels der Meldung TID über die Leitungstechnikstrukturebene der Vermittlungstechnik-Strukturebene übermittelt. Daraufhin wird durch eine Überprüfung festgestellt, daß am Endgerät des aktuellen Gesprächspartners E die "Mulap"-Leitung L1 aufliegt. Daraufhin wird sowohl eine Meldung "Auslösen" an das Leitungstechnik-Programmodul DH-A als auch eine Meldung "Sonderstatus" STS an das Leitungstechnik-Programmodul DH-E übermittelt und an das jeweilige Endgerät weitergegeben. Im jeweils zuständigen Leitungstechnik-Programmodul wird dann gegebenenfalls eine Anpassung der einzelnen Meldungen an das für das Endgerät vorgesehene Meldungsformat vorgenommen. Eine derartige Anpassung erfolgt auch für Meldungen, die von einem Endgerät an die vermittlungstechnische Strukturebene zu übermitteln sind.

Mit der Meldung "Auslösen" wird ein Auslösevorgang für die zwischen den Endgeräten KE-A und KE-E bestehende Verbindung eingeleitet. Es wird dabei durch die Meldung "Auslösen" in der umgekehrten Richtung der Leitungstechnik-Strukturebene DH übermittelt, daß das jeweilige Endgerät ausgelöst hat. Diese Meldung kann generell auch dazu benutzt werden, um Verbindungswege und Töne abzuschalten. Nach den Auslösevorgängen wird der Freizustand für die "Pseudoleitungen" L2 und L3 erreicht und diese Tatsache an den Endgeräten KE-A und KE-E signalisiert. Die Leitung L2 bzw. L3 wird somit als "frei" gekennzeichnet. Neben diesen Auslösevorgängen wird gleichzeitig aufgrund der übermittelten speziellen Meldung "Sonderstatus" STS eine Meldung erzeugt, die als Annahmemeldung derjenigen entspricht, die bei einer Rufannahme generiert wird. Dies erfolgt aufgrund des speziellen Zustandes, in dem die "Mulap"-Leitung 11 steht und der diesem Endgerät als eben diese Meldung "Sonderstatus" STS übermittelt wurde. Kommt in diesen speziellen Zustand die Meldung "Auslösen Partner E", so wird zwar wie bereits beschrieben die aktuelle Verbindung L2, L3 ausgelöst, aber es wird gleichzeitig die erwähnte "Annahme"-Meldung bezüglich der Leitung L1 generiert. Am Endgerät KE-E wird die Leitung L1 als belegt signalisiert. Aufgrund der "Annahme"-Meldung wird der Warteschlangenspeicher durch die Steuerung nach dem Eintrag KZPE, also dem Kennzahlpunkt des Endgerätes KE-E, der in seiner Kennzeichnung mit der Kennzeichnung "Mulap"-Leitung übereinstimmt durchsucht. Wird dieser Eintrag gefunden, so ist damit auch die Adresse des Verbindungsspeichers VSS1 bekannt, da diese Adresse zusätzlich in dem Warteschlangenspeicherelement als Referenz enthalten ist. In diesem zuständigen Verbindungsspeicher VSS1 wird dann in denjenigen Speicherplatz, in dem ursprünglich eine Kennung für den Teilnehmer A eingespeichert war, die Kennung für den Teilnehmer E eingeschrieben. Durch diesen speziellen Speicherplatz ist dann gleichzeitig gekennzeichnet, daß dieser Teilnehmer E den Einberufer-Status für die Konferenz erhält. Mit einer im vermittlungstechnischen Programmodul LDU-CP generierten Belegtmelduung für die "Mulap"-Leitung L1 wird diese Leitung an den Endgeräten KE-A und KE-E als belegt signalisiert. Durch die Vermittlungstechnik erfolgt ein Programmaufruf für die Überprüfung der Verbindungsspeicher daraufhin, ob darin der Konferenzindex Konf-IND eingetragen ist. Wird also dann in dem Ausführungsbeispiel festgestellt, daß für den Verbindungsspeicher VSS1 ein solcher Konferenzindex eingetragen ist, so läßt sich daraus entnehmen welche Teilnehmer für eine Konferenz miteinander zu verbinden sind. Durch den Verweis auf den im Verbindungsspeicher VSS1 stehenden Index ist die Adresse des zugehörigen Konferenzspeicherabschnittes KSSx bekannt, so daß daraus der Befehl für die Durchschaltung der Teilnehmer B bis D und des Teilnehmers E als Einberufer zu der Konferenzverbindung erfolgt. Durch die Betätigung der Sonderfunktionstaste ST am Endgerät des ursprünglichen Einberufers A, deren Wirkung als Zuweistaste zu beschreiben ist wird also bei geringfügiger Erweiterung durch spezielle Programmanteile, - die sich im Wesentlichen auf die Generierung der Annahmemeldung beziehen - die Konferenzverbindung zwischen den Teilnehmer E und den bereits in der Konferenzverbindung stehenden Teilnehmern B bis D vermittelt.

## Patentansprüche

1. Verfahren zur Herstellung von Konferenzverbindungen in einer Kommunikationsanlage, die ein zu ihrer Steuerung dienendes programierbares digitales Rechnersystem ASt aufweist, mit mindestens einem Systemspeicher MEM zur Speicherung von Programmodulen und von Daten und mit gerätbezogenen Einheiten (PS) zur signalisierungsartindividuellen Anschaltung von Endgeräten (KE) und mit einem Koppelnetz (SN) zum Durchschalten der Verbindungswege, wobei das Rechnersystem auf innerhalb der Datenbasis (DB) abgespeicherte gerätebezogene Informationen zurückgreift die u.a. Berechtigungen, Dienste, physikalische Funktionen und besondere Gerätekonstellationen betreffen und wobei als solch eine Gerätekonstellation mindestens eine aus wenigstens einem ersten Kommunikationsendgerät (KE-A, Sekretärteilnehmerstelle) und einem zweiten Kommunikationsendgerät (KE-E, Chef-Teilnehmerstelle) bestehende Gruppe vorgesehen ist und ein für das zweite Kommunikationsendgerät KE-E bestimmter Verbindungsherstellungsversuch gleichzeitig an den zu dieser Gruppe gehörenden Kommunikationsendgeräten signalisiert wird und von dem ersten Kommunikationsendgerät KE-A aus als Einberufer eine Konferenzverbindung mit mehreren weiteren Endgeräten (KE-B, KE-C, KE-D) und/oder über Amtssätze eingeleitet und aufgrund der eingegebenen Prozeduren von dem Rechnersystem hergestellt wurde,
**dadurch gekennzeichnet,**
daß sofern vom ersten Kommunikationsendgerät (KE-A) aus aufgrund seines Einberuferstatus die Konferenzverbindung zwischen den übrigen Konferenzteilnehmern in den Haltezustand übergeführt wurde und eine Verbindungherstellung zu dem zweiten Kommunikationsendgerät (KE-E) erfolgt ist, nach dieser Verbindungsherstellung durch die Betätigung einer Sonderfunktionstaste (ST) aufgrund der damit zur Kommunikationsanlage übermittelten Tastenidentifikationsinformation (TID) und aufgrund der daraufhin aus den zugeordneten permanenten Speicherbereich (KD) der Datenbasis (DB) ausgelesenen vermittlungstechnischen Prozeduren durch die Rechnersteuerung (ASt) sowohl die Auslösung (Meldung AN1 bis AN4) der zwischen dem ersten (KE-A) und dem zweiten Kommunikationsendgerät (KE-E) bestehenden Verbindung als auch gleichzeitig die Übermittlung einer besonderen Signalisierungsinformation (Sonderstatus STS) zu dem zweiten Kommunikationsendgerät (KE-E) veranlaßt wird, daß aufgrund dieser besonderen Signalisierungsinformation (Sonderstatus STS) automatisch ein der Rufannahme entsprechende Meldung (CT) erzeugt und damit die Verbindungsaufbauprozedur eingeleitet wird und somit die Durchschaltung zu der zwischen den übrigen Endgeräten (KE-B, KE-C, KE-D) der ursprünglichen Konferenzteilnehmer gehaltenen Konferenzverbindung erfolgt und daß durch die Rechnersteuerung der Einberuferstatus anstelle des ersten Kommunikationsendgerätes dem zweiten Kommunikationsendgerät (KE-E) zugeordnet wird.

2. Verfahren nach Anspruch 1,
**dadurch gekennzeichnet,**
daß im Zusammenhang mit einer Konferenzverbindung diese in einem Verbindungsspeicherabschnitt (VSS) eines ersten dynamisch zugeordneten Speichers (VS) in den Kennungen für die an einem Verbindungsaufbau oder an einer bestehenden Verbindung beteiligten Kommunikationsendgeräten einspeicherbar sind, als solche gekennzeichnet ist, daß diese Kennzeichnung (Konf. IND) auf einen Abschnitt (KSS) eines zweiten bei einer Konferenzverbindung dynamisch zugeordneten Speichers (KS) verweist, in den sowohl jeweils eine Kennung (CSR-B, CSR-C, CSR-D) für die an der Konferenzverbindung beteiligten Kommunikationsendgeräte (KE-B, KE-C, KE-D) als auch die Adresse (Ad-VSS1) des Verbindungsspeicherabschnittes (VSS1) durch die Rechnersteuerung eingespeichert sind, daß der Verbindungsspeicherabschnitt (VSS1) nach der Herstellung der Konferenzverbindung durch das erste Kommunikationsendgerät (KE-A) als endgerätbezogenen Eintrag lediglich eine den Einberufer-Status definierende Kennung (CSR-A) dieses Endgerätes (KE-A) in einem vorgegebenen Speicherplatz enthält und daß diese Kennung in Zusammenhang mit der Erzeugung des einer Rufannahme entsprechenden Meldung (CT) gelöscht und durch die Kennung (CSR-E) des zweiten Kommunikationsendgerätes (KE-E) ersetzt wird.

3. Verfahren bei einem der Ansprüche 1 - 2,
**dadurch gekennzeichnet,**
daß zur Verbindungsherstellung zwischen den Konferenzteilnehmern (KE-A bzw. KE-E bis KE-D) einer von mehreren und eine Teileinheit des Koppelnetzes (SN) bildender konferenzbaustein Konf-S herangezogen wird, und daß innerhalb der vorhandenen Durchschaltemöglichkeiten für das die ursprüngliche Konferenz aufbauende Kommunikationsendgerät (KE-A) ein Port zur Sicherstellung einer Rückkehrmöglichkeit in die Konferenzverbindung verfügbar gehalten wird.

4. Verfahren nach Anspruch 1,
**dadurch gekennzeichnet,**
daß die vom ersten Kommunikationsendgerät (KE-A) ausgehende Verbindungsherstellung zum zweiten Kommunikationsendgerät (KE-E) durch die Betätigung einer Leitungstaste (TL2) erfolgt, daß aufgrund der bei ihrer Betätigung zur Kommunikationsanlage (KA) übertragenen Identifikationsinformationen die für eine Taste jeweils in der Datenbasis (DB) abgespeicherten und die zugeordneten Vermittlungstechnischen Prozeduren definierenden Informationen zur Durchführung dieser Prozeduren ausgelesen und entsprechend verarbeitet werden.

5. Verfahren nach Ansprüche 1 oder 2, daß die mit der Betätigung der Sonderfunktionstaste (ST) erfolgte Zuteilung der ursprünglichen Konferenzverbindung an das zweite Kommunikationsendgerät (KE-E) in den zuständigen Leitungstasten bzw. Konferenztasten jeweils optisch angezeigt wird.

6. Verfahren nach einem der Ansprüche 1 - 3,
**dadurch gekennzeichnet,**
daß die ursprüngliche Konferenzverbindung aufgrund der Betätigung einer Funktionstaste zwischen den fest vorgegebenem Endgeräten (KE-B bis KE-D) hergestellt wird, deren Daten im permanenten Speicherbereich (KD) der Datenbasis (DB) für eine solche teilnehmerseitig vorab festgelegte Konferenz enthalten sind, daß mit der Betätigung der Sonderfunktionstaste (ST) durch die Rechnersteuerung die Übermittlung der Rufsignalinformationen andie beteiligten Endgeräten unterbunden wird.

7. Verfahren nach einem der vorhergehenden Ansprüche,
**dadurch gekennzeichnet,**
daß der vorgenommene Wechsel im Einberufer-Status für die Konferenzverbindung den übrigen an dieser Konferenz beteiligten Teilnehmer optisch und/oder akustisch angezeigt wird.

## Claims

1. Method for setting up conference calls in a communication system which has a programmable digital computer system ASt used for controlling the communication system, comprising at least one system memory MEM for storing program modules and data and device-related units (PS) for connecting terminal equipment (KE) in a manner individually associated with the signalling type, and comprising a switching network (SN) for switching-through the communication paths, the computer system making use of device-related information stored within the database (DB), which relates, among other things, to authorizations, services, physical functions and special device configurations, at least one group consisting of at least one first communication terminal (KE-A, secretarial subscriber station) and a second communication terminal (KE-E, manager's subscriber station) being provided as such a device configuration, and an attempt at setting up a call intended for the second communication terminal KE-A being simultaneously signalled at the communication terminals belonging to this group and, from the first communication terminal KE-A as convener, a conference call between a number of further terminals (KE-B, KE-C, KE-D) and/or via exchange circuits and having been set up by the computer system on the basis of the procedures input, characterized in that, in as much as the conference call between the remaining conferees has been transferred into the hold state from the first communication terminal (KE-A) due to its status as convener and a call has been set up to the second communication terminal (KE-E), after this call has been set up, both the clear down (message AN1 to AN4) of the connection existing between the first (KE-A) and the second communication terminal (KE-E) and simultaneously the transfer of a special signalling information item (special status STS) to the second communication terminal (KE-E) is initiated by the actuation of a special function key (ST) due to the key identification information (TID) transmitted by this means to the communication system and due to the switching procedures thereupon read out of the associated permanent memory area (KD) of the database (DB) by the computer control (ASt), in that due to this special signalling information (special status STS) a message (CT) corresponding to the call acceptance is automatically generated and thus the call set up procedure -is initiated and thus the switching-through to the conference call held between the remaining terminals (KE-B, KE-C, KE-D) of the original conferees is effected and that the convener status is allocated to the second communication terminal (KE-E) instead of the first communication terminal by the computer control.

2. Method according to Claim 1, characterized in that, in conjunction with a conference call, the latter is identified as such in a call register section (VSS) of a first dynamically allocated memory (VS), into which identifiers for the communication terminals involved in a call set up or in an existing call, in that this identifier (Konf. IND) points to a section (KSS) of a second memory (KS) dynamically allocated in the case of a conference call, into which both in each case an identification (CSR-B, CSR-C, CSR-D) for the communication terminals (KE-B, KE-C, KE-D) involved in the conference call and the address (Ad-VSS1) of the call register section (VSS1) are stored by the computer control, in that the call register section (VSS1), after the conference call has been set up by the first communication terminal (KE-A), only contains as terminal-related entry an identification (CSR-A), defining the convener status, of this terminal (KE-A) in a predetermined storage location and that this identification is deleted in conjunction with the generation of the message (CT) corresponding to a call acceptance and is replaced by the identification (CSR-E) of the second communication terminal (KE-E).

3. Method according to one of Claims 1 - 2, characterized in that for setting up the call between the conferees (KE-A and KE-E to KE-D, respectively), one conference module Konf-S of a number, forming a subunit of the switching network (SN), is used and in that within the existing switching-through capabilities for the communication terminal (KE-A) setting up the original conference, a port is kept available for ensuring that there is a possibility of returning into the conference call.

4. Method according to Claim 1, characterized in that the setting up of a call proceeding from the first communication terminal (KE-A) to the second communication terminal (KE-E) is effected by actuating a line key (TL2), in that, due to the identification information transferred to the communication system (KA) when it is actuated, the information defining the associated switching procedures and in each case stored in the database (DB) for a key, is read out and appropriately processed for carrying out these procedures.

5. Method according to Claims 1 or 2, characterized in that the allocation of the original conference call to the second communication terminal (KE-E), which took place with the actuation of the special function key (ST), is in each case visually displayed in the relevant line keys or conference keys, respectively.

6. Method according to one of Claims 1 - 3, characterized in that, due to the actuation of a function key, the original conference call is set up between the permanently predefined terminals (KE-B to KE-D), the data of which are contained in the permanent memory area (KD) of the database (DB) for such a conference defined in advance by a subscriber, so when the special function key (ST) is actuated, the transmission of ringing signal information to the terminals involved is stopped by the computer control.

7. Method according to one of the preceding claims, characterized in that the change that has been made in the convener status for the conference call is visually and/or audibly indicated to the remaining parties involved in this conference.

## Revendications

1. Procédé d'établissement de communications de conférence dans un système de communication qui comporte un système informatique numérique ASt programmable servant à sa commande, ayant au moins une mémoire de système MEM destinée à mémoriser des modules de programmes et des données et des unités (PS) propres aux appareils et destinées à l'accès à des terminaux (KE), accès spécifique au type de signalisation, et un réseau de connexion (SN) pour l'interconnexion des voies de communication, le système informatique ayant accès en retour à des informations, propres aux appareils et mémorisées dans la base de données (DB), qui concernent entre autres des autorisations, des services, des fonctions physiques et des configurations particulières d'appareils, et selon lequel il est prévu notamment en tant que configuration d'appareils au moins un groupe constitué d'au moins un premier terminal de communication (KE-A, poste secrétaire) et d'un second terminal de communication (KE-E, poste directeur) et une tentative d'établissement de communication destinée au second terminal de communication KE-E étant signalée en même temps aux terminaux de communication appartenant à ce groupe et une communication de conférence avec plusieurs autres terminaux (KE-B, KE-C, KE-D) et/ou par l'intermédiaire de centraux ayant été déclenchée par le premier terminal de communication KE-A comme appelant et ayant été établie par le système informatique sur la base des procédures introduites,
caractérisé par le fait que, dans la mesure où l'on a placé dans l'état de mise en garde, à partir du premier terminal de communication (KE-A) en raison de son statut d'appelant, la communication de conférence entre les autres participants à la conférence et où l'on a effectué un établissement de communication vers le second terminal de communication (KE-E), on provoque à travers la commande par calculateur (ASt), après cet établissement de communication, par l'appui sur une touche de fonction spéciale (ST), sur la base de l'information d'identification de touche (TID) transmise alors au système de communication et sur la base des procédures de commutation lues ensuite dans la zone de mémoire rémanente (KD) associée de la base de données (DB), aussi bien la libération (messages AN1 à AN4) de la communication existant entre le premier terminal de communication (KE-A) et le second terminal de communication (KE-E) que, en même temps, la transmission d'une information de signalisation particulière (état spécial STS) au second terminal de communication (KE-E), par le fait que, sur la base de cette information de signalisation particulière (état spécial STS), on produit automatiquement un message (CT) correspondant à l'acceptation d'appel et on déclenche donc la procédure d'établissement de communication et on effectue ainsi l'interconnexion vers la communication de conférence maintenue entre les autres terminaux (KE-B, KE-C, KE-D) des participants initiaux à la conférence, et par le fait que la commande par calculateur associe le statut d'appelant non plus au premier terminal de communication mais au second terminal de communication (KE-E).

2. Procédé selon la revendication 1,
caractérisé par le fait que, en relation avec une communication de conférence, on la caractérise en tant que telle dans une zone de mémoire de communication (VSS) d'une première mémoire (VS) associée de façon dynamique dans laquelle on peut mémoriser des indicateurs pour les terminaux de communication participant à un établissement de communication ou à une communication existante, par le fait que cette caractérisation (Konf. IND) indique une zone (KSS) d'une seconde mémoire (KS) qui est associée de façon dynamique lors d'une communication de conférence et dans laquelle la commande par calculateur mémorise à chaque fois aussi bien un indicateur (CSR-B, CSR-C, CSR-D) pour les terminaux de communication (KE-B, KE-C, KE-D) participant à la communication de conférence que l'adresse (Ad-VSS1) de la zone de mémoire de communication (VSS1), par le fait que la zone de mémoire de communication (VSS1) contient dans un emplacement de mémoire prédéterminé, après l'établissement de la communication de conférence par le premier terminal de communication (KE-A), comme enregistrement propre au terminal, exclusivement un indicateur (CSR-A), spécifiant le statut d'appelant, de ce terminal (KE-A), et par le fait qu'on efface cet indicateur lors de la production d'un message (CT) correspondant à une acceptation d'appel et qu'on le remplace par l'indicateur (CSR-E) du second terminal de communication (KE-E).

3. Procédé selon l'une des revendications 1 ou 2,
caractérisé par le fait que, pour l'établissement de la communication entre les participants à la conférence (KE-A ou KE-E à KE-D), on exploite l'un des composants de conférence Konf-S formant une sous-unité du réseau de connexion (SN) et par le fait que, parmi les possibilités de connexion présentes, on garde disponible, pour le terminal de communication (KE-A) ayant établi initialement la conférence, un port destiné à lui garantir une possibilité de retour dans la communication de conférence.

4. Procédé selon la revendication 1,
caractérisé par le fait que l'établissement de communication partant du premier terminal de communication (KE-A) vers le second terminal de communication (KE-E) s'effectue en appuyant sur une touche de ligne (TL2) et par le fait que, sur la base des informations d'identification transmises au système de communication (KA) lors de l'appui sur la touche, on lit les informations, mémorisées à chaque fois pour une touche dans la base de données (DB) et déterminant les procédures de commutation associées, en vue de la mise en oeuvre de ces procédures et on les traite en conséquence.

5. Procédé selon l'une des revendications 1 ou 2,
caractérisé par le fait que l'on indique à chaque fois visuellement, dans les touches de ligne ou de conférence compétentes, l'attribution, effectuée lors de l'appui sur la touche de fonction spéciale (ST), de la communication de conférence initiale au second terminal de communication (KE-E).

6. Procédé selon l'une des revendications 1 à 3,
caractérisé par le fait que l'on établit la communication de conférence initiale, en raison de l'appui sur une touche de fonction, entre des terminaux fixés prédéterminés (KE-B à KE-D) dont les données se trouvent dans la zone de mémoire rémanente (KD) de la base de données (DB) en vue d'une conférence de ce genre fixée à l'avance pour ce qui est des abonnés, et par le fait que, lors de l'appui sur la touche de fonction spéciale (ST), la commande par calculateur bloque la transmission des informations de signal d'appel aux terminaux concernés.

7. Procédé selon l'une des revendications précédentes,
caractérisé par le fait que l'on indique de manière visuelle et/ou sonore aux autres abonnés participant à cette conférence le changement effectué dans le statut d'appelant pour cette communication de conférence.
